# FASCICULE DE BREVET EUROPEEN

(11) **EP 0 680 848 B1**
(45) Date de publication et mention de la délivrance du brevet: **29.12.1997**
(21) Numéro de dépôt: 95401005.4
(22) Date de dépôt: 02.05.1995
(51) Int. Cl.: B60R 16/02

(54) **Contacteur électrique tournant comprenant un conducteur souple de longueur limitée**
Drehbares elektrisches Verbindungselement mit einem in der Länge begrenzten flexiblen Kabel
Rotary electric contactor with a soft cable of limited length

(30) Priorité: 04.05.1994 FR 9405459
(43) Date de publication de la demande: 08.11.1995
(73) Titulaire: MAGNETI MARELLI FRANCE, 92000 Nanterre (FR)
(72) Inventeur: Hallet, Michel, F-14320 Clinchamps sur Orne (FR)
(74) Mandataire: Texier, Christian

(56) Documents cités:
- DE-A- 4 301 248
- US-A- 4 572 313

## Description

La présente invention concerne le domaine des contacteurs électriques tournants.

Plus précisément, la présente invention concerne les contacteurs du type comprenant :
- un premier élément de boîtier fixe,
- un second élément de boîtier mobile à rotation par rapport au premier élément de boîtier fixe, et
- un organe conducteur électrique souple placé entre l'élément fixe et l'élément mobile du boîtier et relié à ceux-ci.

La présente invention trouve notamment, mais non exclusivement, application à la transmission de signaux électriques entre des moyens liés au volant d'un véhicule automobile, par exemple un système de gonflage de sac de protection type airbag et des moyens de commande indépendants du volant liés à la colonne de direction.

De nombreux contacteurs électriques tournants du type rappelé ci-dessus ont déjà été proposés.

On peut trouver par exemple un descriptif général de ces contacteurs dans les documents GB-A-869275, GB-A-2216476, US-A-3525536, FR-A-2494922, FR-A-2667457, US-A-4789342, US-A-4540223, FR-A-2667458, FR-A-2667456, FR-A-2477789, DE-A-751684, FR-A-2249458, GB-A-2164506, CH-A-167629, US-A-4422699, US-A-4836795, DE-A-3041258, US-A-4451105, US-A-3525536, US-A-4722690, US-A-4875860.

La présente invention a maintenant pour but de perfectionner les contacteurs électriques tournants connus.

Un but de la présente invention est en particulier de proposer un nouveau contacteur qui permet de réduire la longueur du conducteur souple requise.

Ce but est atteint selon la présente invention grâce à un contacteur électrique tournant comprenant deux éléments susceptibles de rotation relative et un conducteur souple placé entre ces deux éléments caractérisé par le fait que l'élément fixe comprend une chambre principale coaxiale à l'élément mobile et une chambre auxiliaire adjacente à la chambre principale et qui débouche dans celle-ci, le conducteur souple étant d'une part enroulé en spirale et fixé par une première extrémité sur un moyeu placé au centre de la chambre auxiliaire, et d'autre part fixé par sa seconde extrémité sur une câme liée à l'élément mobile, dans lequel la came possède un profil en forme de coeur.

D'autres caractéristiques, buts et avantages de la présente invention apparaîtront à la lecture de la description détaillée qui va suivre, et en regard des dessins annexés donnés à titre d'exemple non limitatif et sur lesquels :
- la figure 1 représente une vue schématique partielle en plan d'un contacteur électrique tournant conforme à un mode de réalisation préférentiel de la présente invention,
- la figure 2 représente une vue en perspective éclatée du contacteur électrique tournant conforme à la présente invention, et
- les figures 3 et 4 représentent deux vues similaires à la figure 1 illustrant plus précisément le fonctionnement du contacteur électrique tournant conforme à l'invention.

Le contacteur électrique tournant conforme à la présente invention comprend essentiellement un boîtier fixe 100, un boîtier mobile 200 et un conducteur souple 300 placé entre ces deux éléments 100 et 200.

Le conducteur souple 300 peut être formé de diverses variantes de réalisation. Il peut être formé par exemple d'un faisceau de fils électriquement conducteurs adjacents et électriquement isolés, ou encore de préférence, d'un film ou circuit imprimé souple, par exemple en matière plastique, pourvu de différentes pistes parallèles métallisées.

Une première extrémité du conducteur souple 300 est reliée à des contacts électriques intégrés à un corps de connecteur 110 lié au boîtier fixe 100. La seconde extrémité du conducteur souple 300 est reliée à des contacts électriques intégrés à un corps de connecteur 210 lié à l'élément mobile 200.

Selon l'invention, le boîtier fixe 100 comprend une chambre principale 120 et une chambre auxiliaire 130.

Les chambres principale 120 et auxiliaire 130 sont de préférence généralement circulaires et adjacentes. C'est-à-dire que la chambre principale 120 et la chambre auxiliaire 130 ont des axes parallèles.

En outre, il est défini une liaison 140 entre les deux chambres 120,130.

En pratique le boîtier fixe 100 peut être formé d'une paroi de base plane 150 pourvue de murets 152 de contour cylindrique, lesquels murets 152 délimitent la chambre principale 120 et la chambre auxiliaire 130 ainsi que le passage de liaison 140 entre celles-ci.

De préférence, comme on le voit sur les figures annexées, ce canal de liaison 140 est éloigné d'un plan passant par les axes de la chambre principale 120 et de la chambre auxiliaire 130. Ainsi, le passage 140 est délimité de préférence par une cloison 153 intégrée aux murets 152 précités, orientée tangentiellement par rapport à l'enveloppe cylindrique de la chambre principale 120 et de la chambre auxiliaire 130.

La chambre auxiliaire 130 est pourvue d'un moyeu central 132.

La chambre principale 120 possède quant à elle de préférence, un fourreau cylindrique central 122 adapté pour servir de guide à rotation à l'élément mobile 200.

Cet élément 200 peut faire l'objet de nombreux modes de réalisation. Il est de préférence coaxial à la chambre principale 120.

De préférence, le boîtier 100 et l'élément mobile 200 sont formés par moulage de matière plastique.

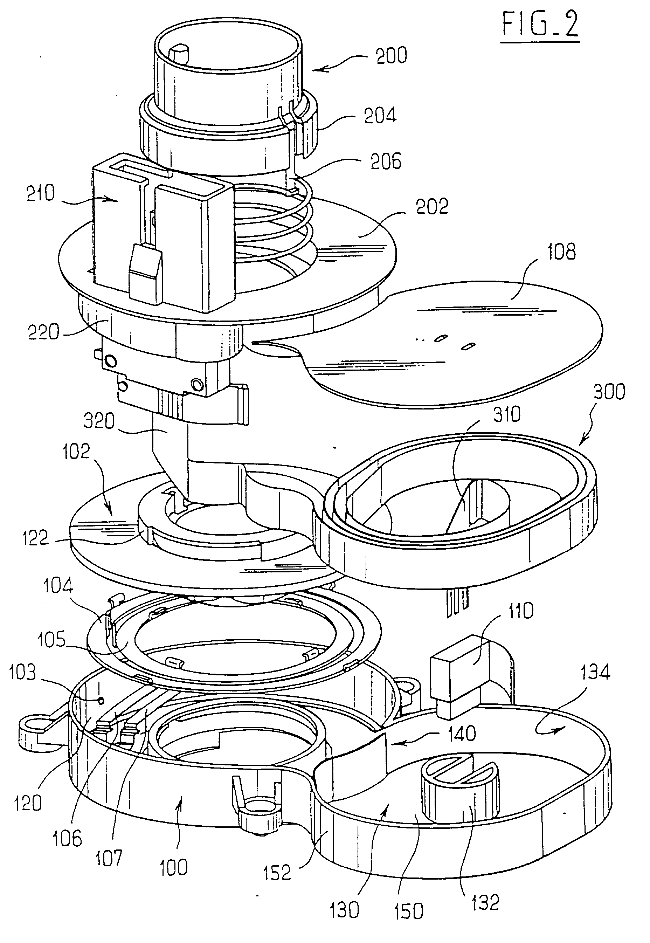

Comme on le voit sur la figure 2, l'élément mobile 200 peut être formé par assemblage de différentes pièces 202, 204. De préférence, l'élément mobile 200 est muni de structures 206 aptes à assurer une immobilisation à translation de l'élément mobile 200 sur le boîtier fixe 100.

De même le boîtier 100 peut faire l'objet de nombreux modes de réalisation.

On distingue par exemple sur la figure 2, une entretoise 102 qui forme avec le boîtier 100 une chambre intermédiaire 103 sous-jacente à la chambre principale 120 et adaptée pour recevoir un contacteur tournant classique à pistes électriquement conductrices 104, 105 et frotteurs associés 106, 107.

On distingue en outre sur la figure 2, un couvercle 108 apte à fermer la chambre auxiliaire 130.

Comme mentionné précédemment, l'élément mobile 200 est muni d'une came centrale 220 à laquelle est liée la seconde extrémité du conducteur souple 300.

Cette came 220 présente un contour en forme de coeur.

En d'autres termes, la came 220 représentée sur les figures annexées présente un plan de symétrie passant par son axe. L'essentiel de la périphérie de cette came 220 présente un contour circulaire de rayon constant. Cependant, de part et d'autre du plan de symétrie, la came 220 présente des secteurs 222, 224 qui convergent progressivement vers l'axe central de la came 220 en rapprochement du plan de symétrie précité.

Ces secteurs convergents 222, 224 sont reliés à l'enveloppe périphérique circulaire 226 de la came par des secteurs 227, 228 de courbure à variation continue, lesquels secteurs 227, 228 peuvent présenter un rayon moyen du même ordre de grandeur que la périphérie cylindrique 226 de la came, ou encore divergents par rapport à l'axe de celle-ci, en rapprochement du plan de symétrie précité et des secteurs 222, 224, comme on le voit sur les figures.

Le point de jonction des secteurs 222, 224, qui correspond au moins localement à une zone de plus faible rayon de la came 220, sert de point de fixation à la seconde extrémité 320 du conducteur souple 300.

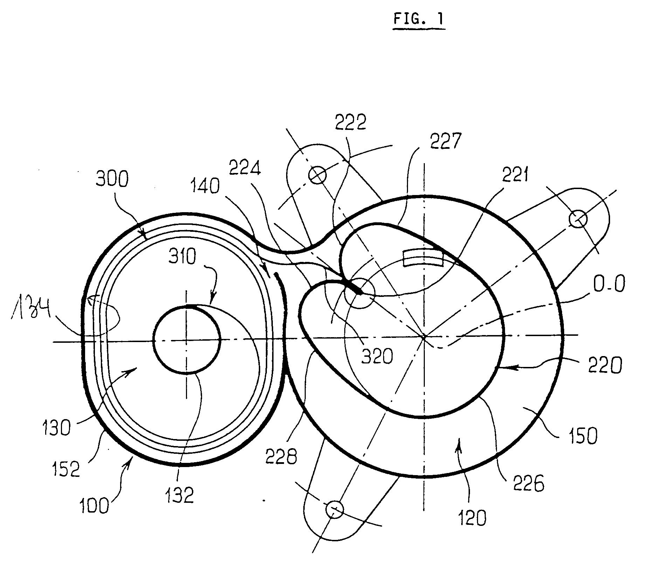

Ainsi comme on le voit sur la figure 1, une première extrémité 310 du conducteur souple 300 est enroulée en spirale dans la chambre auxiliaire 130 et fixée sur le moyeu 132. La seconde extrémité 320 du conducteur souple 300 est fixée sur la came 220 liée à l'élément mobile 200. Le conducteur souple 300 passe ainsi de la chambre auxiliaire 130 à la chambre principale 120 par l'intermédiaire du canal de liaison 140.

On va maintenant décrire le fonctionnement du contacteur électrique tournant représenté sur les figures annexées.

En point milieu, c'est-à-dire dans la position médiane du déplacement relatif à rotation entre l'élément mobile 200 et le boîtier fixe 100, le conducteur souple 300 est placé quasi-intégralement dans la chambre auxiliaire 130. Il se présente par conséquent sous forme de spires de grand diamétre moyen généralement accolées à la périphérie externe 134 de la chambre auxiliaire 130.

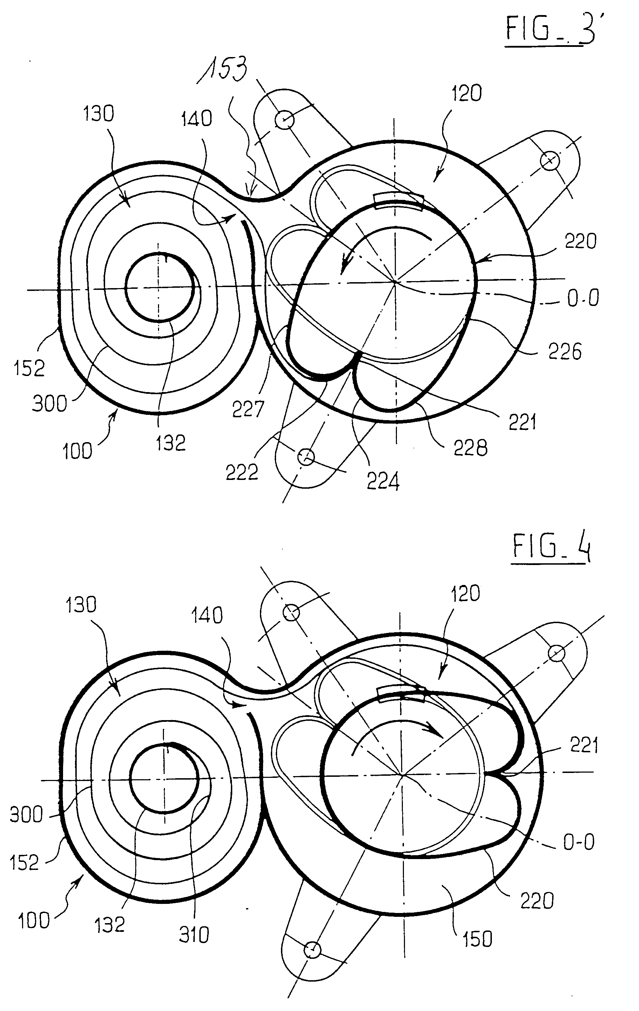

Dans une première position extrême par rapport à ce point milieu, correspondant à un premier sens de rotation, par exemple le sens contraire des aiguilles d'une montre comme représenté sur la figure 3, la première extrémité du conducteur souple 300 est resserrée en spirale sur le moyeu 132, tandis que la seconde extrémité du conducteur souple 300 est enroulée en spirale sur la came 220, sous forme de N/2 spires.

Dans la seconde position extrême du contacteur, qui correspond à un second sens de rotation à partir du point milieu, par exemple le sens des aiguilles d'une montre comme schématisé sur la figure 4, la première extrémité du conducteur souple 300 est également resserrée en spirale sur le moyeu 132 tandis que la seconde extrémité du conducteur souple 300 est également enroulée en spirale sur la came 220, dans un second sens, là encore sous forme de N/2 spires.

Le conducteur souple 300 présente en permanence X spires dans la chambre auxiliaire 130.

Le nombre de spires du conducteur souple 300 enroulées autour de la came 220, en position extrême est au moins égal à la moitié du nombre de tours N relatifs demandés entre les deux éléments 100 et 200. La longueur de conducteur souple 300 placée dans cette situation à l'intérieur de la chambre principale 120 est par conséquent de l'ordre de grandeur de NC1/2, tout en étant légèrement supérieure à NC1/2, si l'on appelle C1 le périmètre extérieur de la came 220.

Dans la position point milieu, ces X spires du conducteur souple 300 sont plaquées contre la circonférence extérieure 134 de la chambre auxiliaire 130. La longueur de conducteur souple 300 dans la chambre auxiliaire 130 est alors de l'ordre de X.C2, si l'on appelle C2 le périmétre extérieur 134 de la chambre auxiliaire 130.

Dans les positions extrêmes au contraire, les X spires du conducteur souple 300 sont plaquées contre la périphérie du moyeu 132. La longueur du conducteur souple 300 située dans la chambre auxiliaire 130 est alors de l'ordre de X.C3, si l'on appelle C3 le périmètre extérieur de la came 132.

On a par conséquent X.C2-X.C3 de l'ordre de grandeur de N/2 C1, si l'on appelle C1 le périmètre de la came 220, C2 le périmètre extérieur de la chambre auxiliaire 130, et C3 le périmètre extérieur du moyeu 132.

L'utilisation d'une came coeur 220 permet d'éviter de blesser le conducteur souple 300 au niveau de son point de liaison sur cette came 220, tout en autorisant un enroulement du conducteur souple alternativement dans un sens ou dans l'autre sur ladite came 220.

On notera que de préférence, les extrémités du conducteur souple 300 sont orientées axialement, c'est-à-dire parallèlement à l'axe de rotation de l'élément mobile 200 par rapport au boîtier fixe 300 et pour cette raison pliées à 90°.

Ces extrémités du conducteur souple 300 peuvent être pourvues d'un boîtier de protection mécanique et/ou électrique surmoulé ou rapporté par tout moyen approprié, comme décrit par exemple dans une demande de brevet parallèle déposée par la Demanderesse.

Bien entendu la présente invention n'est pas limitée aux modes de réalisation particuliers qui viennent d'être décrits mais s'étend à toute variante conforme à son esprit.

En particulier, on pourra prévoir un moyeu 132 non point fixe, mais susceptible de rotation et rappelé élastiquement en position de repos, comme schématisé sur les figures annexées. On comprend que dans ce cas, la première extrémité 310 du conducteur souple 300 est elle-même susceptible de rotation dans la chambre auxiliaire 130. Cette disposition permet de supprimer la réserve de conducteur souple dans la chambre 130, en position extrême du contacteur, et par conséquent de diminuer encore la longueur requise du conducteur souple. Cependant, cette variante exige de prévoir des moyens de liaison électrique entre l'extrémité 310 mobile du conducteur souple 300 et le connecteur lié au boîtier fixe 100.

On notera que sur les figures annexées, l'axe de rotation de l'élément mobile 200 et par conséquent de la came mobile 220 par rapport au boîtier fixe 200 est référencé O-O.

Par ailleurs, le point de fixation de la seconde extrémité du conducteur souple 320 sur la came coeur 220 est référencé 221.

## Revendications

1. Contacteur électrique tournant comprenant deux éléments (100, 200) susceptibles de rotation relative et un conducteur souple (300) placé entre ces deux éléments (100, 200), caractérisé par le fait que l'élément fixe (100) comprend une chambre principale (120) coaxiale à l'élément mobile (200) et une chambre auxiliaire (130) adjacente à la chambre principale (120) et qui débouche dans celle-ci, le conducteur souple (300) étant, d'une part enroulé en spirale et fixé par une première extrémité (310) sur un moyeu (132) placé au centre de la chambre auxiliaire (130), et d'autre part fixé par sa seconde extrémité (320) sur une came (220) liée à l'élément mobile (200), dans lequel la came (220) possède un profil en forme de coeur.

2. Contacteur selon la revendication 1, caractérisé par le fait que la chambre principale (120) et la chambre auxiliaire (130) ont des contours sensiblement circulaires centrés sur des axes parallèles entre eux.

3. Contacteur selon l'une des revendications 1 ou 2, caractérisé par le fait que le canal de liaison (140) entre la chambre principale (120) et la chambre auxiliaire (130) est éloigné d'un plan passant par l'axe desdites chambres.

4. Contacteur selon l'une des revendications 1 à 3, caractérisé par le fait que le canal de liaison (140) est délimité au moins partiellement par une cloison (153) tangentiellement à l'enveloppe cylindrique de la chambre auxiliaire (130) et de la chambre principale (120).

5. Contacteur selon l'une des revendications 1 à 4, caractérisé par le fait que la seconde extrémité du conducteur souple (300) est reliée à la came coeur (220) au niveau du point de plus faible rayon de celle-ci.

6. Contacteur selon l'une des revendications 1 à 5, caractérisé par le fait que le périmétre (C1) de la came coeur (220), le périmétre extérieur (C2) de la chambre auxiliaire (130) et le périmétre (C3) du moyeu (132) sont adaptés pour respecter la relation :
(X.C2-X.C3) de l'ordre de grandeur de N/2.C1
relation dans laquelle X représente le nombre de spires du conducteur souple (300) dans la chambre auxiliaire (130) et N représente le nombre de tours de rotation requis entre l'élément mobile (200) et le boîtier fixe (100).

7. Contacteur selon l'une des revendications 1 à 6, caractérisé par le fait que le moyeu (132) est monté à rotation dans la chambre auxiliaire (130) et rappelé élastiquement en position de repos.

## Claims

1. A rotary electrical contactor comprising two elements (100, 200) that can be rotated relative to each other, and a flexible conductor (300) placed between the two elements, said contactor being characterized by the fact that the fixed element (100) includes a main chamber (120) in alignment with the moving element (200) and an auxiliary chamber (130) adjacent to the main chamber (120) and opening out therein, the flexible conductor (300) being firstly wound spirally on and fixed via a first end (310) to a hub (132) placed in the center of the auxiliary chamber (130), and secondly fixed via its second end (320) to a cam (220) associated with the moving element (200), in which the cam (220) has a heart-shaped profile.

2. A contactor according to claim 1, characterized by the fact that the main chamber (120) and the auxiliary chamber (130) have outlines that are substantially circular and that are centered on mutually parallel axes.

3. A contactor according to claim 1 or 2, characterized by the fact that the link channel (140) between the main chamber (120) and the auxiliary chamber (130) is distant from a plane including the axes of said chambers.

4. A contactor according to any one of claims 1 to 3, characterized by the fact that the link channel (140) is defined at least in part by a partition (153) tangential to the cylindrical casing of the auxiliary chamber (130) and to the cylindrical casing of the main chamber (120).

5. A contactor according to any one of claims 1 to 4, characterized by the fact that the second end of the flexible conductor (300) is connected to the heart-shaped cam (220) at the point on said cam that has the smallest radius.

6. A contactor according to any one of claims 1 to 5, characterized by the fact that the perimeter (C1) of the heart-shaped cam (220), the outer perimeter (C2) of the auxiliary chamber (130), and the perimeter (C3) of the hub (132) are organized to satisfy the following relationship:
(X.C2-X.C3) of the same order as N/2.C1
in which relationship X represents the number of turns of the flexible conductor (300) in the auxiliary chamber (130), and N represents the number of revolutions required between the moving element (200), and the fixed box (100).

7. A contactor according to any one of claims 1 to 6, characterized by the fact that the hub (132) is mounted to rotate in the auxiliary chamber (130) and is returned resiliently to the rest position.

## Patentansprüche

1. Drehbarer elektrischer Verbinder, zwei Elemente (100, 200) umfassend, die eine Relativdrehbewegung ausführen können, und ein biegsames Element (300) , angeordnet zwischen diesen beiden Elementen (100, 200),
**dadurch gekennzeichnet,**
daß das feststehende Element (100) eine zu dem beweglichen Element (200) koaxiale Hauptkammer (120) umfaßt und eine Hilfskammer (130), an die Hauptkammer (120) angrenzend und in diese mündend, wobei der biegsame Leiter (300) einerseits spiralförmig aufgerollt ist und mit einem ersten Ende (310) an einem Kern (132) befestigt ist, der sich im Zentrum der Hilfskammer (130) befindet, und andererseits mit seinem zweiten Ende (320) an einer mit dem beweglichen Element (200) verbundenen Kurvenscheibe (220) befestigt ist, die ein herzförmiges Profil aufweist.

2. Verbinder nach Anspruch 1, dadurch gekennzeichnet, daß die Hauptkammer (120) und die Hilfskammer (130) im wesentlichen kreisrunde Konturen haben, zentriert auf zueinander parallele Achsen.

3. Verbinder nach einem der Ansprüche 1 oder 2, dadurch gekennzeichnet, daß der Verbindungskanal (140) zwischen der Hauptkammer (120) und der Hilfskammer (130) beabstandet ist von einer Ebene, die durch die Achse der besagten Kammern verläuft.

4. Verbinder nach einem der Ansprüche 1 bis 3, dadurch gekennzeichnet, daß der Verbindungskanal (140) wenigstens partiell begrenzt wird durch eine Zwischenwand (153), tangential zur zylindrischen Umhüllungsfläche der Hilfskammer (130) und der Hauptkammer (120).

5. Verbinder nach einem der Ansprüche 1 bis 4, dadurch gekennzeichnet, daß das zweite Ende des biegsamen Leiters (300) mit der herzförmigen Kurvenscheibe (220) im Punkt ihres kleinsten Radius verbunden ist.

6. Verbinder nach einem der Ansprüche 1 bis 5, dadurch gekennzeichnet, daß der Umfang (C1) der herzförmigen Kurvenscheibe (220), der Außenumfang (C2) der Hilfskammer (130) und der Umfang (C3) des Kerns (132) angepaßt sind, um folgender Relation zu entsprechen:
(X.C2-X.C3) in der Größenordnung von N/2.C1
wobei in dieser Relation X die Anzahl der Windungen des biegsamen Leiters (300) in der Hilfskammer (130) repräsentiert und N die Anzahl der Umdrehungen, die erforderlich sind zwischen dem beweglichen Element (200) und dem feststehenden Gehäuse (100).

7. Verbinder nach einem der Ansprüche 1 bis 6, dadurch gekennzeichnet, daß der Kern (132) drehbar in der Hilfskammer (130) angebracht ist und sich elastisch in die Ruhestellung zurückdreht.
